# EUROPÄISCHE PATENTSCHRIFT

(11) **EP 3 446 396 B1**
(45) Veröffentlichungstag und Bekanntmachung des Hinweises auf die Patenterteilung: **24.02.2021**
(21) Anmeldenummer: 17717178.2
(22) Anmeldetag: 13.04.2017
(51) Int. Cl.: H02K 1/27, H02K 21/24, H02K 23/54

(54) **ELEKTRISCHE SCHEIBENLÄUFERMASCHINE**
ELECTRIC DISC ROTOR MACHINE
MACHINE ÉLECTRIQUE À ROTOR À DISQUE

(30) Priorität: 19.04.2016 DE 102016004694
(43) Veröffentlichungstag der Anmeldung: 27.02.2019
(73) Patentinhaber: eMoSys GmbH, 82319 Starnberg (DE)
(72) Erfinder: GRUENDL, Andreas, 82319 Starnberg (DE); HOFFMANN, Bernhard, 82319 Starnberg (DE)
(74) Vertreter: Schmidt, Steffen J.
(86) Internationale Anmeldenummer: PCT/EP2017/058941
(87) Internationale Veröffentlichungsnummer: WO 2017/182386

(56) Entgegenhaltungen:
- WO-A1-02/055349
- WO-A2-98/26495
- DE-A1- 19 927 731
- GB-A- 2 485 185
- US-A1- 2003 048 013
- US-A1- 2015 084 446

## Beschreibung

### Einleitung

Hier wird ein elektrischer getriebeloser Scheiben-Kurzzeitmotor beschrieben, der zum Beispiel für einen Einsatz in einem Fahrzeug, als Antrieb in einem Roboterarm oder zur Positionierung z.B. von Maschinenteilen und dergl. mehr geeignet und vorgesehen ist. Dabei kann es sich auch um eine elektrische Maschine handeln, die als Hilfs- oder Nebenaggregat in dem Fahrzeug oder Fluggerät geeignet und vorgesehen ist.

### Hintergrund

Elektrische Maschinen werden in einer Vielzahl von Industrie-, Mobilitäts- und Komfort / Sicherheitsanwendungen eingesetzt. Dabei besteht oft die Anforderung nach einer kompakten, leichtgewichtigen Maschine die mit minimaler Verzögerung eine Drehbewegung von wenigen hundert Grad bis zu mehreren (etwa zehn) Vollumdrehungen mit hohem Drehmoment ausführt. Eine weitere Forderung besteht nach guter Eignung zum Betrieb der Maschine mit einem mehrphasigen leistungselektronischen Stellglied (Umrichter oder Wechselrichter). Bisher sind Scheibenläufer, insbesondere Permanentmagnet-Maschinen, meist in Spezialanwendungen wie getriebelosen, langsam laufenden Drehmomentmaschinen anzutreffen. Außerdem werden Scheibenläufermaschinen vor allem eingesetzt, wenn ein kleines Längen-Durchmesser-Verhältnis gefordert ist.

FR 1 278 669 A betrifft einen Scheibenläufermotor, dessen Ständer Permanentmagnete trägt, und dessen Läufer aus einer zweilagigen Platine gebildet ist, die zur Ausformung von Wickelköpfen Blechstreifen aufweist, die von der Platine senkrecht abstehen. Die Ständer-Feldspulen-Anordnung ist einphasig.

US 2003/0048013 A1 betrifft einen Ventilator für elektrische Geräte, der dazu bestimmt ist, möglichst lange während der Betriebszeit des elektrischen Geräts zu laufen. Dabei hat das Kühlgebläse einen elektrischen Antrieb. Der elektrische Antrieb hat einen magnetischen Läufer und einen Ständer. Der Läufer hat eine ebene Scheibe und trägt in Umfangsrichtung verteilte Magnete, die mit dem Ständer interagieren. Der Ständer hat in einem kreisförmigen Muster angeordnete metallische Spulen, die mit den Magneten des Läufers interagieren. Die Gestalt der hier verwendeten Ständerspulen ist so gewählt, dass keine Wickelköpfe vorhanden sind.

US2015/0084446 und GB 2485185 betrifft Maschinenanordnungen, die sehr ähnlich aufgebaut sind wie die Scheibenläufermaschine aus US 2003/0048013 A1.

DE 199 27 731 A1 und WO 02/055349 A1 betreffen Antriebe für Gurtstraffer, verwenden jedoch völlig andere Maschinenkonzepte als FR 1 278 669 A oder GB 2 485 185.

### Zugrundeliegendes Problem

Die zu lösende Aufgabe ist eine elektrische Maschine mit kostengünstigem Aufbau, einfacher Herstellung und effizientem, sicherem Betrieb.

### Kurzfassung der hier vorgestellten Lösung

Ein elektrischer getriebeloser Scheiben-Kurzzeitmotor wie er generell aus der GB 2485185 A bekannt ist, wird durch die Merkmale des Patentanspruchs 1 weitergebildet.

Der hier vorgestellte elektrische getriebelose Scheiben-Kurzzeitmotor ist gegenüber herkömmlichen Scheibenläufermaschinen in der Lage, für kurze Zeitintervalle von wenigen Millisekunden (2 - 10 ms, zum Beispiel 5 ms) bis zu wenigen Sekunden (2 - 10 s, zum Beispiel 5 s) mit einer deutlich gesteigerten Kraftdichte zu arbeiten.

Dabei ist der hier vorgestellte elektrische getriebelose Scheiben-Kurzzeitmotor in der Lage, je kürzer die Betriebszeit, ein umso höheres Drehmoment bereitzustellen. Dies erlaubt, den hier vorgestellten elektrische getriebelose Scheiben-Kurzzeitmotor aufgrund seiner Bauart, für kurze Zeitintervalle, nahezu beliebig zu überlasten. Gegenüber herkömmlichen Scheibenläufermaschinen ist der hier vorgestellte elektrische getriebelose Scheiben-Kurzzeitmotor um wenigstens den Faktor 5 überlastbar. Heutige Scheibenläufermaschinen sind zum Beispiel in der Lage, eine Flächenschubdichte von etwa 10N/cm²bereitzustellen. Eine hier vorgestellte Scheibenläufermaschine mit vergleichbaren Abmessungen ist in der Lage,
für 5ms eine 70 fache Flächenschubdichte, also 700N/cm² bereitzustellen, oder
für 50ms eine 20 fache Flächenschubdichte, also 200N/cm² bereitzustellen, oder
für 500ms eine 7 fache Flächenschubdichte, also 70N/cm² bereitzustellen, oder
für 5000ms eine 2 fache Flächenschubdichte, also 20N/cm² bereitzustellen.

Wesentlich ist hierbei, dass praktisch keine magnetische Überlastungsbeschränkung besteht. Lediglich eine thermische Überlastung könnte auftreten, wenn die verwendeten Materialen Wärmekoeffizienten haben, die eine ausreichend schnelle Wärmeabfuhr beeinträchtigen. Insbesondere bei Anwendungen, in denen die Maschine in der Regel im unteren Belastungsbereich betrieben wird, und nur gelegentlich, oder einmal oder wenige Male im oberen Leistungsbereich in Betrieb genommen wird, bietet der hier beschriebene elektrische getriebelose Scheiben-Kurzzeitmotor Vorteile. So ist zum Beispiel ein Kurzzeitbetrieb mit Anlaufzeiten im Millisekundenbereich bei sehr hoher Beschleunigung und einer sehr hohen Drehmomentdichte aufgrund des geringen benötigten Bauraums möglich. Die hier beschriebenen elektrischen getriebelosen Scheiben-Kurzzeitmotoren sind sehr geräuscharm und funktionssicher, da sie kein Getriebe benötigen. Außerdem erlauben sie eine einfache und sensorlose Drehwinkel- oder Wegerfassung in der Maschine; ihre Drehzahl / ihr Weg lässt sich sehr effizient regeln. Da sich zwischen den Spulen / Permanentmagneten vorzugsweise kein Eisen befindet, ist ein maximaler Kupfereinsatz zur Minimierung der ohmschen Verluste möglich; außerdem gibt es keine Platzkonkurrenz zwischen einem Eisenkreis und den Feldspulen. Des Weiteren ist keine Begrenzung der Ströme durch Eisensättigung möglich; es gibt nur die Superposition der magnetischen Felder. Anfallende Verlustleistung kann während der kurzen Betriebsdauer in den Leitern der Feldspulen aufgenommen und in der anschließenden Ruhephase abgegeben werden; somit ist keine externe Kühlung erforderlich. Ein besonderer Vorteil des hier beschriebenen elektrischen getriebelosen Scheiben-Kurzzeitmotors ist auch die Eignung zum mehrfachen Überlastbetrieb in sehr geringen zeitlichen Abständen.

### Ausgestaltungen, Varianten und Eigenschaften

Die hier beschriebenen elektrischen getriebelosen Scheiben-Kurzzeitmotoren können entweder als Innen- oder als Außenläufermaschine realisiert sein. Sie kommen insbesondere als Drehmaschine zum Einsatz; aber auch eine Implementierung als Linearmaschine ist möglich. Die elektrischen getriebelosen Scheiben-Kurzzeitmotoren der hier beschriebenen Art können entweder fremd- oder selbsterregt ausgestaltet sein. Bei fremderregten Maschinen sind eine oder mehrere Erregerwicklungen für die Erregung vorgesehen. Die Erregerwicklung wird z. B. durch eine gesteuerte Stromquelle mit Energie gespeist. Bei einer selbsterregten Maschine treten Permanentmagnete an die Stelle der Erregerwicklungen.

Eine fremd- oder selbsterregte Maschine kann als permanent erregte Maschine ausgestaltet sein. Schleifringe zum Speisung mit elektrischer Leistung und Ankerwicklung (en) sind dabei als gedruckte Schaltung auf einer dünnen Kunststoff- oder Keramikscheibe realisiert. Der elektrische Strom wird im einfachsten Fall über Kohlebürsten direkt auf die die Schleifringe an der Scheibe zugeführt. Die Scheibe trägt somit die Schleifringe und die LäuferWicklung(en) und läuft in einem engen Luftspalt zwischen Ständerspulen oder Permanentmagneten. Zur Sicherstellung der mechanischen Funktion können auch Gleitfolien in den/ die Luftspalt/e zwischen die Scheibe/n und Ständerspulen oder Permanentmagnete/n angeordnet sein.

Eine Maschine mit Permanentmagneten (Magnetläufer oder - Ständer) ist zwar etwas kostenintensiver wegen der Kosten der Permanentmagnete, hat aber die geringsten (Wärme-)Verluste. Es ist auch möglich, die Maschine als Asynchronläufer oder Wirbelstromläufer zu realisieren. Diese Variante ist zwar relativ kostengünstig, hat aber relative hohe Verluste und einer gesteigerten Aufwand bei der Steuerelektronik.

Ein nutenloser Ständer kann eine oder mehr Leiterplatten haben, die als Feldspulen- und / oder Elektronikträger für die Wechselrichter dienen, und einen magnetischen Rückschluss. Dieser magnetische Rückschluss kann aus massivem Eisenmaterial, aus Sintermaterial oder geblecht ausgeführt sein; letztere Varianten halten die Ummagnetisierungsverluste klein. Insbesondere bei Ausführungen für niedrige Drehzahlen und kleinen Induktionen kann der Rückschluss aus massiven Eisen gefertigt sein.

Ein selbsterregter oder permanenterregter Läufer kann eine weichmagnetische Trägerscheibe, zum Beispiel aus weichmagnetischem Stahl haben, an der beidseitig in axialer orientierte Magnetscheibensegmente z.B. aus Ferrit oder kunststoffgebundenem NdFeB angebracht sind. Alternativ dazu kann der selbsterregte oder permanenterregte Läufer als durchgehende Magnetscheibe realisiert sein, die polweise axial alternierend orientiert magnetisiert ist.

Für größere Leistungsdichten wird der hier vorgestellte elektrische getriebelose Scheiben-Kurzzeitmotor als Doppelscheibenläufer mit Zwischenständer ausgeführt, der z.B. mit Seltenerden-Magnetsegmenten oder entsprechenden Ständerwicklungen versehen und. So entfallen die bei einer Einscheibenläuferausführung auftretenden axialen Zugkräfte.

Elektrische getriebelose Scheiben-Kurzzeitmotoren der hier vorgestellten Art haben durch ihre eisenfreien Läufer eine hohe Dynamik bei einem geringen Gewicht. Die Läufer sind entweder Anordnungen von (Selten-Erden-)Permamentmagnetelemente oder haben geeignet gestaltete Feldspulen. Das den Maschinen zugrundeliegende physikalische Prinzip führt zu einem direkt proportionalen Verhältnis zwischen Spannung und Drehzahl sowie Strom und Drehmoment.

Da die Ständer- (und ggf. Läufer-)Spulen eisenfrei sind, entfallen auch etwaige Eisenverluste. Auch die Spuleninduktivität kann nennenswert reduziert sein. Die Läufermasse und damit deren translatorisches und rotatorisches Trägheitsmoment sind ebenfalls reduziert. Die Maschinen haben eine geringe Störabstrahlung, eine hohe elektromagnetische Verträglichkeit (EMV), und sie haben keine Reluktanzmomente. Schließlich haben die Maschinen eine geringe axiale Länge. Im Ständer auftretende Verlustwärme kann ebenfalls relativ einfach nach außen abgeführt werden.

Die Läufer- und/oder Ständer-Wicklungen sind als gedruckte, gestanzte oder geätzte Leiterbahnen auf/in mehrlagigen Leiterplatten realisiert. Auch die Einbettung von vorgefertigten Luftspulen aus (Kupfer-, Aluminium- oder dergl.) Draht- oder Blechmaterial in (faserverstärktes) -Kunststoffmaterial (Epoxy, Keramik, PTFE, Polyimid) ist vorgesehen. Die Ständer- und Läuferscheiben mit den Spulen können mittels reibungserhöhenden oder reibungsverringernden, isolierenden Beschichtungen versehen sein.

Durch den Aufbau der Ständer-Feldspulen als Multilayerplatinen ist ein hoher Kupferfüllfaktor bei großer mechanischer Festigkeit möglich; Die erforderliche Windungszahl ist durch Implementierung der Feldspulen in mehreren Multilayerlagen realisiert. Die Abstände der Leiterbahnen kann auf die doppelte Leiterbahndicke begrenzt sein; dies reduziert den Totraum auf und in den Trägerscheiben. Im Übrigen ist der mehrlagige Spulenaufbau mittels Durchkontaktierungen realisiert. Zusätzliche Wärmekapazität in den Trägerscheiben kann durch dünne Alu-, Kupfer- oder Prepreglagen realisiert sein.

Durch die Gestaltung der Ständer-Feldspulen als Multilayerplatinen ist es möglich, den bei den Ständerspulen unvermeidlichen Wickelkopf in axialer Richtung der Maschine auszugestalten. Dabei hat in einer Variante die Ständer-Feldspule eine auf zum Beispiel zwei, drei, vier bis etwa zehn Lagen strukturierte Feldspule, die sich im Wesentlichen in radialer Richtung erstreckt.

Dazu ist wenigstens eine Ständer-Feldspule an wenigstens einer Ständerscheibe vorgesehen, die sich entlang des Umfangs des Ständers mäanderförmig erstreckt und im Wesentlichen in radialer Richtung erstreckende Abschnitte der Feldspule sowie sich im Wesentlichen in Umfangsrichtung des Ständers orientierte Wickelköpfe der Feldspule aufweist. Jeder der Wickelköpfe hat eine radiale Erstreckung, die nur einem Bruchteil einer Querabmessung des radial verlaufenden Abschnitts der Feldspule entspricht. Unter Querabmessung der Wickelköpfe ist hier die Abmessung des Wickelkopfes in radialer Richtung verstanden, während unter Querabmessung des radial verlaufenden Abschnitts der Feldspule dessen Abmessung in tangentialer oder in Umfangsrichtung verstanden ist.

In radialer Richtung innen und/oder außen baut die Multilayerplatine zu einer oder beiden axialen Seiten der sich im Wesentlichen in radialer Richtung erstreckenden Abschnitte der Feldspule die Platine um mehrere Lagen dicker als der Bereich der Platine, der die radialen Abschnitte der Feldspule trägt. Der dicker bauende Bereich der Platine weist zumindest einen Teil der Wickelköpfe der Feldspule auf. Dazu umfasst dieser in axialer Richtung vorstehende, vorzugsweise etwa ringförmige Multilayer-Bereich sich abschnittsweise in Umfangsrichtung erstreckende Leiterbahnen. Diese Leiterbahn-Abschnitte sind mit den sich in radialer Richtung erstreckenden Abschnitten der Feldspule jeweils mittels einer oder mehreren Durchkontaktierungen elektrisch verbunden.

Wenn zum Beispiel der radial verlaufende Abschnitt der Feldspule auf zwei Lagen der Multilayerplatine verteilt ist (oberhalb und unterhalb einer Epoxydharzschicht) und die Querabmessung der Wickelköpfe in radialer Richtung ein Viertel der Querabmessung des radial verlaufenden Abschnitts der Feldspule in tangentialer oder in Umfangsrichtung beträgt, hat der dicker bauende Bereich der Platine drei zusätzliche Lagen auf jeder Seite der Platine.

Dies erlaubt eine bessere Ausnutzung des auf einen größeren Teil der Gesamtfläche des Ständers erstreckten, magnetisch wirksamen, radial orientierten Abschnitts der Feldspule. Dies gilt insbesondere für den radial außen liegenden Bereich, da die Spulenfläche mit dem Quadrat des Radius zunimmt. In radialer Richtung innen und/oder außen baut die Multilayerplatine zu einer (oder beiden) Seiten des Bereichs der Multilayerplatine mit der Feldspule um mehrere (zwei bis etwa zwanzig) Lagen dicker. Diese in axialer Richtung vorstehenden Multilayer(-ringe) enthalten in Umfangsrichtung sich erstreckende Leiterbahnen. Sie sind mit den sich in radialer Richtung erstreckenden Abschnitten der Feldspule jeweils mittels einem oder mehreren Durchkontaktierungen elektrisch verbunden und bilden jeweils einen Wickelkopf. Diese Maßnahme hält die ohmschen - und damit auch thermischen - Verluste in der Ständerspule minimal und gleicht die verringerte radiale Erstreckung der Wickelköpfe aus.

Damit bildet jede Lage des Ständers einen einseitigen oder zweiseitigen, an seiner Deckfläche und/oder seiner Bodenfläche offenen kreiszylindrischen Ring. Dieser Ring ist in radialer Richtung durch die Multilayerplatine(n) mit dem radialen Abschnitt der Ständer-Feldspulen in axialer Richtung mittig unterteilt. Somit ist auch stirnseitig / bodenseitig offener Raum für Permanentmagnete der Läufer geboten, welche jeweils in die offenen kreiszylindrischen Ringe eintauchen können.

Die Permanentmagnete der Läufer können als Ringsegmente gestaltet sein, die in Umfangsrichtung facettiert sind. D.h. sie sind in einer Einfassung gehalten, die benachbarte Ringsegmente zueinander starr orientiert und beabstandet.

Diese Ausgestaltung verlängert die axiale Erstreckung der Maschine kaum. Im Übrigen lässt sich durch diese Maßnahme die Polteilung größer dimensionieren, so dass die Effektivität der Permanentmagnete gegenüber einer kleinen Polteilung gesteigert ist.

Der Aufbau der Maschine ist sehr einfach und kostengünstig zu realisieren, da auf die Lamellierung der Rückschlüsse verzichtet werden kann, keine Nuten vorhanden sind und die Materialien effizient genutzt werden.

Die Maschine ist einfach in die angetriebene Ausrüstung integrierbar.

Die Feldspulen weisen in die Trägerscheibe jedes Läufers oder jedes Ständers eingebettete oder zumindest teilweise frei liegende, mehrphasig ausgestaltete, Leicht- oder Buntmetall (insbesondere Aluminium, Kupfer, oder dergl.) enthaltende Leiterbahnzüge, mit Durchkontaktierungen auf. Bei Varianten der Scheibenläufermaschine mit Permanentmagneten können in die Trägerscheibe jedes Läufers oder jedes Ständers eingebettete oder zum Luftspalt hin zumindest teilweise frei liegende Permanentmagnete vorgesehen sind, die in axialer Richtung etwa 0.5 bis 3-mal, vorzugsweise ein- bis zweimal so hoch wie die Abmessung des Ständers in axialer Richtung sein können. Die Permanentmagnete sind hierbei vorzugsweise als Selten-Erde-Magnete mit einer hohen Remanenzinduktion und/oder mit einer hohen Koerzitivfeldstärke ausgestaltet.

Die Trägerscheibe jedes Läufers kann drehfest und in axialer Richtung beweglich auf einer Maschinenwelle aufgenommen sein. Die Trägerscheibe/n des Läufers und die Trägerscheibe/n des Ständers können in axialer Richtung beweglich zueinander angeordnet sein.

Zwischen oder in den Feldspulen befindlicher Raum des Läufers und/oder des Ständers kann bei einer Variante der Scheibenläufermaschine eisenlos ausgestaltet sein.

Der Ständer kann drei- oder höherphasig ausgestaltete Ständerspulen aufweisen, die mit entsprechenden Läufern zu mehreren gekoppelten einphasigen Maschinen konfiguriert sein können. Alternativ oder zusätzlich kann jeder Läufer als vorzugsweise einphasiger Wirbelstromläufer oder als Magnetläufer ausgestaltet sein.

Bei einer Variante können an beiden Stirnseiten der Maschine eisenhaltige Abdeckungen vorgesehen sein, die zur Aufnahme hoher magnetischer Axialkräfte ausgestaltet sein können. Diese Axialkräfte können aus zum Beispiel 5 - 20 bar magnetischem Axialdruck im Betrieb resultieren. Dazu können die eisenhaltigen Abdeckungen zum Beispiel durch Verstärkungsrippen ausreichend verwindungs- und biegesteif gestaltet sein. Alternativ oder zusätzlich kann jede oder nur eine der eisenhaltigen Abdeckungen zur Magnetfluss-Rückführung ausgestaltet sind. Diese Maßnahmen führen zur Reduzierung der ohmschen Verluste, solange noch keine magnetischen Sättigungseffekte auftreten.

In einer anderen Variante kann der elektrische getriebelose Scheiben-Kurzzeitmotor aus einer geraden Zahl symmetrischer Maschinen gebildet sein, die axial hintereinander angeordnet sind. Hierbei kann die Magnetfluss-Rückführung und / oder die Strom-Rückführung einer geradzahligen Maschine im Ständer einer ungeradzahligen Maschine erfolgen. Mit anderen Worten wird bei einer Anordnung aus zwei oder mehr Maschinen der Strom der zweiten Maschine im Ständer der ersten Maschine zurückgeführt. Das reduziert den Bauraumverlust der Wickelköpfe deutlich.

In einer weiteren Variante kann der Läufer in einer ersten Bewegungs- oder Dreh-Richtung durch eine Federanordnung vorgespannt sein. Dies erlaubt insbesondere bei Ausführungen, deren Drehwinkel begrenzt ist, eine effiziente Betriebsweise, da die Betriebs-Ansteuerung der Maschine nur in eine Richtung erfolgen muss. In die entgegengesetzte Richtung stellt die Federanordnung die Maschine zurück oder unterstützt die Maschine.

In einer besonderen Ausgestaltung kann die Federanordnung auch als Feldspulen-Stromzuführung des Läufers ausgestaltet ist. Dazu ist die Federanordnung einerseits mit einer elektrischen Leistungsversorgung gekoppelt und andererseits mit der/den Feldspule/n des Läufers schleifend oder festverbunden. Dies ist eine besonders effiziente, betriebssichere und kostengünstige Variante. Dabei kann die Federanordnung parallel zueinander geschaltete, nebeneinander oder mehrlagige, gegeneinander isolierte Spiralfedern haben, die insbesondere aus Federstahl oder Federbronze geformt sind. Diese Spiral-Federanordnung kann dabei um die Maschinenwelle geschlungen sein.

Die Trägerscheiben der Läufer und/oder der Ständer können mit einer reibungserhöhenden oder reibungsverringernden Beschichtung versehen sein. Auf die Trägerscheiben der Läufer und der Ständer kann auch bei solchen Varianten eine Einrichtung zur Ausübung von Zug- oder Schubkraft wirken. Diese Einrichtung kann insbesondere eine oder mehrere Zug- oder Schubfedern umfassen. Dies erlaubt die Realisierung sehr effizienter, getriebeloser selbsthemmender oder freilaufender Maschinen. Weiterhin können im Betrieb des elektrischen getriebelosen Scheiben-Kurzzeitmotors elektrische Ströme durch die Ständerspulen mit vorbestimmter Phasenlage gegenüber der Position der Spulen oder Permanentmagnete der Läufer eine anziehende oder abstoßende Kraft zwischen Läufer- und Ständerscheiben bewirken. Hierdurch lasst sich sowohl eine Reibungsbremswirkung oder eine Arretierfunktion realisieren, als auch eine berührungsfreie Rotation der Läufer- gegenüber dem Ständerscheiben unterstützt wird.

Ein Beispiel für den Einsatz des hier vorgestellten elektrischen getriebelosen Scheiben-Kurzzeitmotors ist ein voll elektronisch gesteuerten Gurtretraktor zum Einsatz in einem Fahrzeuginsassen-Rückhaltesystem, sowohl für Front- und Fond- Passagiere. Herkömmliche Gurtstraffer sind nach ihrer Art der örtlichen Unterbringung in Schlossstraffer und Aufrollstraffer unterteilt. Der Schlossstraffer strafft das Gurtband an Schulter- und Beckengurt gleichzeitig. Beim Aufrollstraffer wird zunächst das Schultergurtband und danach zeitlich verzögert der Beckengurt verkürzt. Ein Aufrollstraffer benötigt für das Straffen der gleichen Länge an Gurtlose mehr Zeit als ein Schlossstraffer.

Die zum Aufrollen / Straffen des Gurts erforderliche Energie wird konventionell entweder mechanisch oder pyrotechnisch bereitgestellt. Ziel ist dabei, in kurzer Zeit (5 bis 30 ms) nach dem Fahrzeugaufprall den Sicherheitsgurt zu straffen, um den Insassen in die gewünschte aufrechte Position zu bringen. Pyrotechnische Gurtstraffer enthalten eine Treibladung, deren Festtreibstoff etwa 1 bis 2 Gramm Nitrocellulose enthält. Die pyrotechnische Energiespeicherung wird bei Schlossstraffern und bei Aufrollstraffern verwendet. Im Auslösefall wird die Treibladung im Gasgenerator gezündet. Die dabei freiwerdende Gasladung wirkt auf einen im Zylinder befindlichen Kolben, der über ein Drahtseil mit dem Gurtschloss beim Schlossstraffer bzw. der Gurtwickelspule des Gurtautomaten beim Aufrollstraffer verbunden ist und somit das Gurtband strafft. Pyrotechnische Gurtstraffer sind gefährlicher und haben eine höhere Störanfälligkeit. Außerdem können sie den Gurt im Bedarfsfall nicht nachstraffen.

Ein Vorteil eines intelligenten Gurtsystems mit einem hier vorgestellten des hier vorgestellten elektrischen getriebelosen Scheiben-Kurzzeitmotor ist das Fehlen solcher pyrotechnischen Einrichtungen. Des Weiteren bietet eine solche Scheibenläufermaschine eine Vielzahl von Vorteilen in einem solchen gesteuerten Gurtsystem. Der gesteuerte Gurtretraktor hat keine Kupplung zwischen der Scheibenläufermaschine und der Gurtwickelwelle. Vielmehr erlaubt die Scheibenläufermaschine im Normalbetrieb einen Freilauf gegen eine im Gurtretraktor befindliche Gurtwickelfederanordnung, wobei sich der Läufer des des hier vorgestellten elektrischen getriebelosen Scheiben-Kurzzeitmotors frei durchdreht.

Der Gurtretraktor besteht aus den vom Gesetzgeber geforderten Komponenten: Fahrzeugsensor, Gurtbandsensor, das Gurtband aufnehmende Wickelwelle, auf einen Basiskraftbegrenzer wirkende Wellenverriegelung. Im stromlosen Zustand der Scheibenläufermaschine wickelt die Gurtwickelfederanordnung das Gurtband die Wickelwelle auf.

Im gesteuerten Gurtretraktor wird der vorliegende elektrische getriebelose Scheiben-Kurzzeitmotor bei Gurtauf- und -abwickelvorgängen elektronisch im Direktbetrieb angesteuert. So ist das vom angegurteten Insassen wahrgenommene Spannverhalten des Gurts durch direkte Einflussnahme auf das Drehmoment und die Drehgeschwindigkeit der Wickelwelle zu realisieren. Dieser Direktbetrieb gliedert sich in drei Bereiche: (i) einen normalen Benutzerbetrieb, (ii) einen Unfallvorstufenbetrieb (Umfeldsensoren des Kraffahrzeugs erkennen eine kritische Verkehrssituation) und (iii) einen Unfallbetrieb (Ein Unfallgeschehen tritt in diversen Varianten ein (Frontalaufprall, Seitenaufprall, Fahrzeugüberschlag und Kombinationen davon)).

Die Ansteuerung der Wickelwelle ist sehr einfach durch den Verlauf des Stroms und der Spannung für den elektrischen getriebelosen Scheiben-Kurzzeitmotor zu implementieren, welche der hier vorgestellten Maschine eingespeist werden.

Für kurzzeitige Höchstleistungen des hier vorgestellten elektrischen getriebelosen Scheiben-Kurzzeitmotors in einem Crashfall können Energiespeicher vorgehalten werden, die entweder im Batteriemanagement bei Hochvolt-Fahrzeugbatterien enthalten sind oder in der Ansteuerungselektronik der Scheibenläufermaschine integrierte Ultracaps sind. Bei reinen Elektrofahrzeugen oder bei Hybridantriebsfahrzeugen können zusätzliche Energiespeicher entfallen.

Weitere Anwendungen der Scheibenläufermaschine sind Stellantriebe mit den genannten Eigenschaften der Scheibenläufermaschine, wie Verstelleigenschaften in Fahrzeugen im Crashfall.

Als Bewegungsprofile können dem Fahrer / Insassen aber auch noch andere Informationen bereitgestellt werden. Um einen Fehler anzuzeigen, kann die Steuerung des Gurtsystems z.B. mit entsprechendem Ruckeln der Wickelwelle bei jedem Angurtvorgang die Notwendigkeit einer Werkstattfahrt signalisieren. Sollte der Gurtautomat einen Unfall durchlaufen haben, bei dem die Kraftbegrenzung aktiv war, so lässt sich dieser Gurtautomat nicht mehr in einen Normalmodus zurücksetzen und zeigt dem Fahrer an, dass er ausgewechselt werden muss, auch wenn eine sichere Werkstattfahrt noch möglich wäre.

Weitere Merkmale, Eigenschaften, Vorteile und mögliche Abwandlungen dieser elektrischen Maschine werden anhand der nachstehenden Beschreibung verdeutlicht, in der auf die beigefügten Zeichnungen Bezug genommen ist.

Die hier beschriebenen Varianten des hier vorgestellten elektrischen getriebelosen Scheiben-Kurzzeitmotors sowie deren Funktions- und Betriebsaspekte dienen lediglich dem besseren Verständnis ihrer Struktur, Funktionsweise und Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zu Gegenstad weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

Der hier beschriebene elektrische getriebelose Scheiben-Kurzzeitmotor hat ein sehr geringes Leistungsgewicht und eine minimale Läuferträgheit. Der einfach strukturierte Aufbau erfordert sehr wenige Komponenten und ist sehr einfach skalierbar. Außerdem ist er sehr einfach in Serienfertigung zu realisieren.

In einer Variante sind mehrere Statoren in axialer Richtung gestapelt, wobei auch mehrere Stapel phasengleich bestromt werden können. Diese Variante hat in axialer Richtung den magnetischen Flussweg geringster Länge und maximaler magnetischer Erregung.

Mit der hier vorgestellten Maschine ist ein direktantreibender getriebeloser Scheiben-Kurzzeitmotor realisierbar, der für Anwendungen bestimmt ist, die kurzzeitig, extrem schnell bereitgestellte, sehr hohe Momente benötigen. So ist es mit der hier vorgestellten Maschine möglich, nicht zuletzt wegen der geringen Läufermassen, hohe Winkelbeschleunigungen von bis 300/min/ms bereitzustellen.

Soi ist der direktantreibende getriebelose Scheiben-Kurzzeitmotor dazu geeignet und bestimmt, zum Beispiel Sicherheitsfunktionen für extrem schnelle Bewegungen zu realisieren. So kann dieser Motor als mechanischer Ersatz für Treibladungsaktuatoren dienen. Ebenso ist der Motor bei Prozesssteuerungen und -regelungen, Sicherheitseinrichtungen, und Ventile geeignet. So ist dieser Motor im Automotive-Bereich als Sitzverstellung, als Sicherheitsschließantrieb für KFZ-Schiebedächer oder als mechanischer Aktuator für weitere Funktionen mit hoher Dynamik und hoher Drehmomentanforderung im msec-Bereich einsetzbar.

### Kurzbeschreibung der Figuren

Fig. 1 zeigt eine als elektrischer getriebeloser Scheiben-Kurzzeitmotor gestaltete elektrische Maschine in einer schematischen teilweise geschnittenen Seitenansicht.
Fig. 2 zeigt einen Läufer der Maschine aus Fig. 1 in einer schematischen Draufsicht.
Fig. 3 zeigt einen Ständer der Maschine aus Fig. 1 in einer schematischen Draufsicht.
Fig. 4 zeigt eine teilweise Detailansicht einer Feldspule des Läufers zwischen zwei Ständer Feldspulen.
Fig. 5 zeigt eine teilweise Draufsicht einer Feldspule des Ständers zwischen zwei Läufer-Permanentmagneten.
Fig. 5a zeigt eine teilweise Schnittansicht der Feldspule des Ständers zwischen zwei Läufer-Permanentmagneten.

### Detailbeschreibung mehrerer Varianten

In den Fig. ist eine elektrische Maschine in Gestalt eines elektrischen getriebelosen Scheiben-Kurzzeitmotors 10 gezeigt. Diese Maschine hat einen Läufer 14 und einem zumindest teilweise korrespondierenden Ständer 16. Der Läufer 14 und der Ständer haben 16 im vorliegenden Beispiel fünf bzw. sechs jeweils eisenlose Trägerscheiben 14', 16'. Diese Trägerscheiben 14', 16' tragen in dieser gezeigten Variante jeweils Feldspulen 20. In anderen, hier nicht im Detail dargestellten Varianten können an die Stelle der Feldspulen 20 des Läufers oder des Ständers auch Permanentmagnete →, ← treten.

Der Läufer 14 und der Ständer 16, genauer gesagt deren jeweilige Trägerscheiben 14', 16' haben jeweils eine einander zugewandte Stirnseite 14a, 14b; 16a, 16b. Dabei ist zwischen der Läufer-Trägerscheibe 14' und einer benachbarten Ständer-Trägerscheibe 16' jeweils ein Luftspalt 18 ausgebildet.

Die Feldspulen 20 oder die Permanentmagnete 22 sind derart ausgerichtet und an der Trägerscheibe 14' jedes Läufers 14 bzw. der Trägerscheibe 16' jedes Ständers 16 angeordnet sind, dass die Feldspulen 20 im stromdurchflossenen Zustand und/oder die Permanentmagnete 22 zumindest zeitweilig gleich- oder gegensinnige Magnetfelder hervorrufen, die eine Dreh- oder Längs-Relativbewegung des Läufers 14 zum Ständer 16 bewirken.

Der elektrische getriebelose Scheiben-Kurzzeitmotor 10 hat an beiden Stirnseiten der Maschine eisenhaltige Abdeckungen 22, die zur Aufnahme magnetischer Axialkräfte ausgestaltet sind. In den Abdeckungen 22 sind Lager 22a zur Aufnahme einer Maschinenwelle 26 vorgesehen. Außerdem sind die eisenhaltige Abdeckungen 22 als Magnetfluss-Rückführung ausgestaltet.

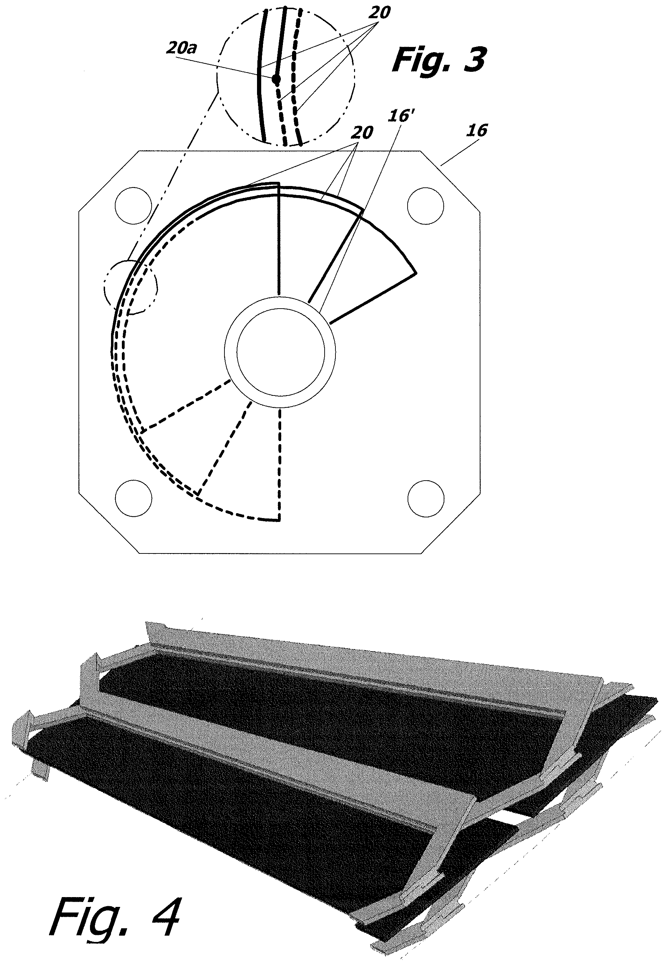

Die Trägerscheibe 14' jedes Läufers 14 und die Trägerscheibe 16' jedes Ständers 16 sind in der veranschaulichten Variante als mehrlagige Platinen aus glasfaserverstärktem Epoxid ausgebildet. Die Feldspulen 20 sind hier in die Trägerscheibe 14' jedes Läufers 14 oder jedes Ständers 16 eingebettete mehrphasig ausgestaltete, Kupfer enthaltende Leiterbahnzüge mit Durchkontaktierungen 20a. Zwischen oder in den Feldspulen 20 befindlicher Raum des Läufers 14 und/oder des Ständers 16 ist eisenlos. Die in Fig. 3 gestrichelt gezeigten Abschnitte der Feldspulen 20 sind in die Unterseite der Trägerscheibe 16' jedes Ständers 16 eingebettet, die durchgehend veranschaulichten Abschnitte der Feldspulen 20 sind in die Oberseite der Trägerscheibe 16' jedes Ständers 16 eingebettet. In Fig. 3 sind die einzelnen Phasen der Feldspulen 20 des Ständers 16 mit unterschiedlichem Radius veranschaulicht. Dies dient lediglich der besseren Anschaulichkeit; in der Realität haben sie alle den gleichen Radius. Details der Feldspulen 20 des Ständers 16 und des Läufers sind in Fig. 4 veranschaulicht. Hier sind die Trägerscheiben 14', 16' des Ständers 16 und des Läufers 14 der besseren Übersichtlichkeit weggelassen. Damit ist die Durchkontaktierung der Ständer-Feldspulen gut erkennbar. So fluchten die mehreren Phasen der Ständer-Feldspulen, von denen in Fig. 4 nur jeweils eine ober halb und unterhalb der der Läufer-Feldspulen gezeigt ist, räumlich dicht gepackt mit den dazwischenliegenden der Läufer-Feldspulen.

Die Maschinenwelle 26 hat einen gezahnten Abschnitt, auf dem die Trägerscheiben 14' jedes Läufers 14 drehfest und in axialer Richtung beweglich aufgenommen sind. Die Ständer-Trägerscheiben 16' sind auf vier Zapfen 22b an einer der Abdeckungen 22 drehfest und ebenfalls längsverschieblich aufgenommen. Damit sind die Läufer-Trägerscheiben 14' des Läufers 14 die Ständer-Trägerscheiben 16' in axialer Richtung entlang der Maschinenwelle 26 beweglich zueinander angeordnet.

Der Ständer 16 hat in einer hier veranschaulichten Variante dreiphasig ausgestaltete Ständerspulen 20, die mit entsprechenden Läufern 14 zu mehreren gekoppelten einphasigen Maschinen konfiguriert sind.

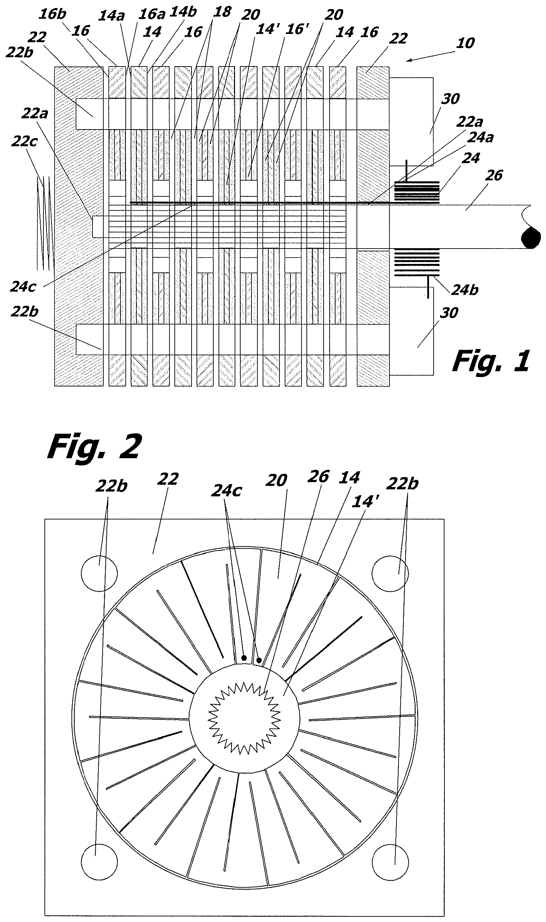

Der Läufer 14 ist in einer ersten Bewegungs- oder Dreh-Richtung durch eine Federanordnung 24 in Form einer Spiralblattfeder vorgespannt, die um die Maschinenwelle 26 geschlungen ist. In dieser Variante ist die Federanordnung 24 auch als Feldspulen-Stromzuführung des Läufers 14 ausgestaltet. Dazu hat hier die Federanordnung 24 parallel zueinander geschaltete, nebeneinander angeordnete gegeneinander elektrisch isolierte Spiralfederabschnitte 24a, 24b aus Federbronze. Die einzelnen Spiralfederabschnitte 24a, 24b der Federanordnung 24 sind einerseits mit einer elektrischen Leistungsversorgung 30 elektrisch gekoppelt und andererseits mit der/den Feldspule/n 20 des Läufers 14 über entsprechende Kontaktleitungen 24c elektrisch verbunden. In ähnlicher Weise sind - wenn auch in Fig. 1 nicht im Einzelnen veranschaulicht - auch die Feldspulen 20 der Ständer 16 mit der elektrischen Leistungsversorgung 30 elektrisch verbunden.

Die Läufer- und die Ständer-Trägerscheiben 14', 16' sind mit einer nicht weiter veranschaulichten reibungserhöhenden Beschichtung versehen. Alternativ oder zusätzlich ist außen an einer (oder beiden) Abdeckungen 22 eine Schubfeder 22c angeordnet, welche die Läufer- und Ständer-Trägerscheiben 14', 16' - im stromlosen Zustand der Scheibenläufermaschine - zusammendrängt. Damit sind die Scheibenläufermaschine und ihre Maschinenwelle 20 gegen Verdrehen gesperrt, ohne dass es eines Gesperres bedarf. Durch geeignete Phasenlage der Ständerströme gegenüber der Läuferposition bei der Bestromung der Ständerwicklungen kann eine abstoßende Kraft zwischen Läufer- und Ständerscheiben hervorgerufen werden, welche die Federbelastung und damit die Bremswirkung aufhebt.

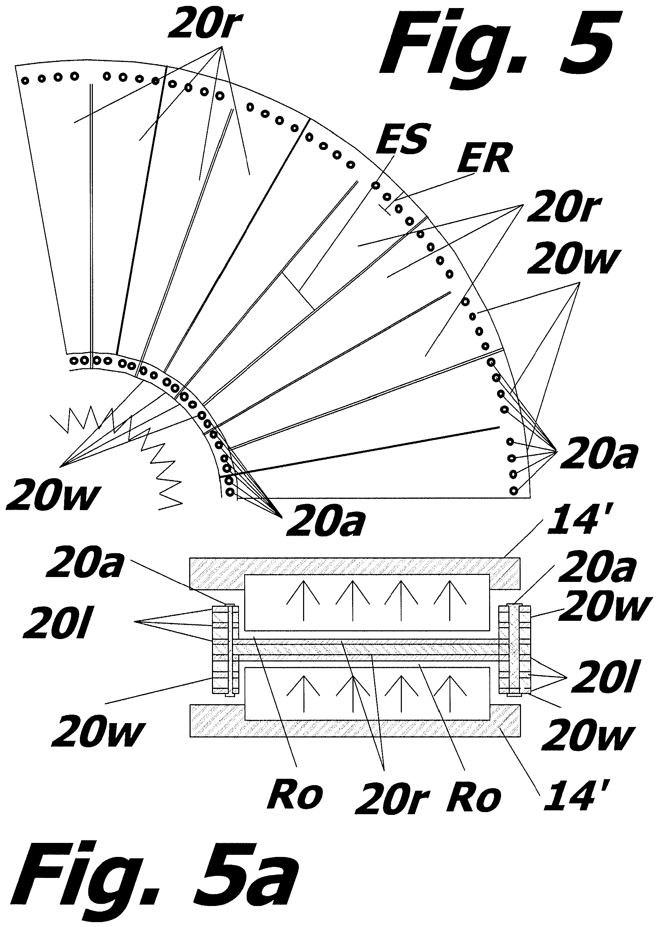

Der elektrische getriebelose Scheiben-Kurzzeitmotor 10 hat in einer in den Fig. 5, 5a gezeigten weiteren Variante einen Aufbau, bei dem die Ständer-Feldspulen 20 der Ständer-Trägerscheiben wie nachstehend beschrieben gestaltet sind. Die Ständer-Feldspulen 20 sind in einer Multilayerplatine auf einer oder wenigen Lagen strukturiert. Sie erstrecken sich entlang des Umfangs der Ständerscheiben mäanderförmig. Dabei hat jede Ständer-Feldspule 20 sich im Wesentlichen in radialer Richtung erstreckende Abschnitte 20r sowie sich im Wesentlichen in Umfangsrichtung des Ständers orientierte Wickelköpfe 20w. Jeder der Wickelköpfe 20w hat eine radiale Erstreckung EW, die nur einem Bruchteil einer (mittleren) Querabmessung des radial verlaufenden Abschnitts ES der Ständer-Feldspule 20 entspricht. Im gezeigten Beispiel beträgt dieses Verhältnis EW/ES etwa 1/3. In radialer Richtung innen und außen, also im Bereich der Wickelköpfe 20w baut die Multilayerplatine zu beiden axialen Seiten (in Fig. 5a oben und unten) der sich im Wesentlichen in radialer Richtung erstreckenden Abschnitte 20r der Feldspule 20 um mehrere Lagen dicker als der Bereich der Platine, der die radialen Abschnitte der Feldspule 20 trägt. Die innen und außen liegenden, dicker bauenden Bereiche der Platine umfassen die Wickelköpfe 20w der Feldspule 20. Dazu bilden diese Bereiche des in axialer Richtung vorstehenden ringförmigen Multilayers sich abschnittsweise in Umfangsrichtung erstreckende Leiterbahnen 20l. Diese sich in Umfangsrichtung erstreckenden Leiterbahnen 20l sind mit den sich in radialer Richtung erstreckenden Abschnitten der Feldspule 20r jeweils mittels einer oder mehreren Durchkontaktierungen 20a elektrisch verbunden. Aus dem Verhältnis EW/ES von 1/3 ergibt sich, dass jeweils an der Oberseite und an der Unterseite zwei zusätzliche sich in Umfangsrichtung erstreckende Leiterbahnen 20l vorgesehen sind, so dass insgesamt der Leiterbahnquerschnitt im Bereich des Wickelkopfes 20w in etwa dem Leiterbahnquerschnitt im Bereich des sich in radialer Richtung erstreckenden Abschnitts 20r der Feldspule 20 entspricht.

So bildet bei der Scheibenläufermaschine eine Lage des Ständers einen in dieser gezeigten Variante zweiseitigen, an seiner Deckfläche und seiner Bodenfläche offenen kreiszylindrischen Ring. Dieser Ring ist durch die Multilayerplatine(n) mit dem radialen Abschnitt 20r der Ständer-Feldspulen20 in axialer Richtung unterteilt. Dadurch ist ein stirnseitig und bodenseitig offener Raum Ru, Ro für die Permanentmagnete →, ← der Scheiben des Läufers 14' gebildet, welche jeweils in die offenen kreiszylindrischen Ringe eintauchen (siehe Fig. 5a).

Die Permanentmagnete des Läufers sind als Ringsegmente gestaltet, die in Umfangsrichtung facettiert sind, so dass die benachbarte Ringsegmente zueinander starr orientiert und beabstandet sind.

Mit einem elektrischen getriebelosen Scheiben-Kurzzeitmotor dieser Art ist ein elektronisch gesteuerter, treibladungsloser Gurtautomat eines Fahrzeuginsassenrückhaltesystems zu realisieren. Dabei ist die Scheibenläufermaschine direkt und getriebelos mit einer Gurtwickelwelle in Form einer verlängerten Maschinenwelle 20 gekoppelt. Der elektrischen Leistungsversorgung 30 ist dabei eine elektronische Steuerung 30 zugeordnet. In dieser elektronischen Steuerung 30 sind in Abhängigkeit von unterschiedlichen Bewegungsprofilen jeweilige Gurtbandpositionen, Gurtbandauf- und/oder abrollgeschwindigkeiten und Gurtbandauf- und/oder abrolldrehmomente abgespeichert sind. Basierend auf unterschiedlichen Bewegungsprofilen und in Abhängigkeit von entsprechenden Sensorsignalen (Sitzbelastungssensor, Pre-crash-Sensor, Fahrzeugaufprallsensor, etc.) ist der elektrische getriebelose Scheiben-Kurzzeitmotor anzusteuern.

## Patentansprüche

1. Elektrischer getriebeloser Scheiben-Kurzzeitmotor (10), mit
wenigstens einem Läufer (14) und wenigstens einem zumindest teilweise korrespondierenden Ständer (16), wobei die Feldspulen (20) jedes Ständers (16) zwei-, drei- oder höherphasig ausgestaltet sind, und mit einer elektrischen Leistungsversorgung (30) elektrisch verbunden sind, der wenigstens eine Läufer (14) und der wenigstens eine Ständer (16) jeweils eine einander zugewandte Stirnseite (14a, 14b; 16a, 16b) haben, wobei
• der wenigstens eine Läufer (14) und der wenigstens eine Ständer (16) jeweils eine eisenlose Trägerscheibe (14', 16') aufweisen, die Feldspulen (20) oder Permanentmagnete (22) tragen,
• zwischen der Trägerscheibe (14') jedes Läufers (14) und der Trägerscheibe (16') jedes Ständers (16) jeweils ein Luftspalt (18) ausgebildet ist,
• die Feldspulen (20) und/oder die Permanentmagnete derart ausgerichtet und an der Trägerscheibe (14') jedes Läufers (14) bzw. der Trägerscheibe (16') jedes Ständers (16) angeordnet sind, dass die Feldspulen (20) im stromdurchflossenen Zustand und/oder die Permanentmagnete (→, ←) zumindest zeitweilig gleich- oder gegensinnige Magnetfelder hervorrufen, die eine Dreh- oder Längs-Relativbewegung des Läufers (14) zum Ständer (16) bewirken,
• die Trägerscheibe (16') jedes Ständers (16) als Multilayerplatine ausgebildet ist und mehrere Ständer-Feldspulen (20), aufweist, **dadurch gekennzeichnet, dass**
• die Feldspulen (20) jedes Ständers (16) eingebettete oder zumindest teilweise frei liegende, mehrphasige Leiterbahnzüge mit Durchkontaktierungen (20a) aufweisen, die sich entlang des Umfangs jedes Ständers (16) mäanderförmig erstrecken und im Wesentlichen in radialer Richtung erstreckende Abschnitte der Ständer-Feldspulen (20) sowie sich im Wesentlichen in Umfangsrichtung des Ständers (16) orientierte Wickelköpfe (20w) der Ständer-Feldspulen (20) aufweisen,
• in radialer Richtung innen und/oder außen die Multilayerplatine zu einer oder beiden axialen Seiten der sich im Wesentlichen in radialer Richtung erstreckenden Abschnitte (20r) der Ständer-Feldspule (20) die Multilayerplatine um mehrere Lagen dicker baut als der Bereich der Platine, der die radialen Abschnitte (20r) der Ständer-Feldspule (20) trägt, wobei
• der dicker bauende Bereich der Multilayerplatine zumindest einen Teil der Wickelköpfe (20w) der Ständer-Feldspule (20) aufweist, indem diese in axialer Richtung vorstehenden vorzugsweise ringförmigen Multilayer-Platinenlagen sich abschnittsweise in Umfangsrichtung erstreckende Leiterbahnen (20l) umfassen, die mit den sich in radialer Richtung erstreckenden Abschnitten (20r) der Ständer-Feldspule (20) jeweils mittels einer oder mehreren der Durchkontaktierungen (20a) elektrisch verbunden sind.

2. Elektrischer getriebeloser Scheiben-Kurzzeitmotor (10) nach Patentanspruch 1, wobei die Trägerscheibe (14') jedes Läufers (14) und/oder die Trägerscheibe (16') jedes Ständers (16) als Platine ausgebildet ist, und
als Permanentmagnete (→, ←) in die Trägerscheibe (14') jedes Läufers (14) oder jedes Ständers (16) eingebettete oder zumindest teilweise frei liegende Permanentmagnete (→, ←) vorgesehen sind, die in axialer Richtung etwa 0.5 bis 3-mal, vorzugsweise einbis zweimal so hoch wie der Luftspalt (18) sind, wobei die Permanentmagnete (→, ←) vorzugsweise als Selten-Erde-Magnete mit einer hohen Remanenzinduktion und/oder mit einer hohen Koerzitivfeldstärke ausgestaltet sind.

3. Elektrischer getriebeloser Scheiben-Kurzzeitmotor (10) nach Patentanspruch 1 oder 2, wobei die Trägerscheibe (14') jedes Läufers (14) drehfest und in axialer Richtung beweglich auf einer Maschinenwelle (20) aufgenommen ist.

4. Elektrischer getriebeloser Scheiben-Kurzzeitmotor (10) nach einem der Patentansprüche 1 bis 3, wobei zwischen oder in den Feldspulen (20) befindlicher Raum des Läufers (14) und/oder des Ständers (16) eisenlos ist.

5. Elektrischer getriebeloser Scheiben-Kurzzeitmotor (10) nach einem der Patentansprüche 1 bis 4, wobei
(i) die Ständerspulen (20) mit entsprechenden Läufern (14) zu mehreren gekoppelten einphasigen Maschinen konfiguriert sind, und/oder
(ii) jeder Läufer (14) als vorzugsweise einphasiger Wirbelstromläufer oder als Magnetläufer ausgestaltet ist.

6. Elektrischer getriebeloser Scheiben-Kurzzeitmotor (10) nach einem der Patentansprüche 1 bis 5, wobei an beiden Stirnseiten der Maschine eisenhaltige Abdeckungen (22) vorgesehen sind, die
(i) zur Aufnahme hoher magnetischer Axialkräfte ausgestaltet sind, und/oder
(ii) zur Magnetfluss-Rückführung ausgestaltet sind, und/oder
die Scheibenläufermaschine (10) aus einer geraden Zahl symmetrischer Maschinen gebildet ist, die axial hintereinander angeordnet sind, und die Magnetfluss-Rückführung und / oder die Strom-Rückführung einer geradzahligen Maschine in einer ungeradzahligen Maschine erfolgt.

7. Elektrischer getriebeloser Scheiben-Kurzzeitmotor (10) nach einem der Patentansprüche 1 bis 6, wobei
(i) der Läufer (14) in einer ersten Bewegungs- oder Dreh-Richtung durch eine Federanordnung (24) vorgespannt ist, und/oder
(ii) die Federanordnung (24) als Feldspulen-Stromzuführung des Läufers ausgestaltet ist, die einerseits mit einer elektrischen Leistungsversorgung (30) gekoppelt ist, und andererseits mit der/den Feldspule/n (20) des Läufers (14) über Kontaktleitungen (24c) schleifend oder festverbunden ist, und/oder
(iii) die Federanordnung (24) parallel zueinander geschaltete, nebeneinander oder mehrlagige, gegeneinander isolierte Spiralfedern, insbesondere aus Federstahl oder Federbronze aufweist.

8. Elektrischer getriebeloser Scheiben-Kurzzeitmotor (10) nach einem der Patentansprüche 1 bis 6, wobei die Trägerscheiben (14', 16') der Läufer (14) und/oder Ständer (16) mit einer reibungserhöhenden oder reibungsverringernden Beschichtung versehen sind, und/oder auf die Trägerscheiben (14', 16') der Läufer (14) und der Ständer (16) eine Einrichtung zur Ausübung von Zug- oder Schubkraft wirkt, wobei die Einrichtung insbesondere eine oder mehrere Zug- oder Schubfedern (22c) umfasst.

9. Elektrischer getriebeloser Scheiben-Kurzzeitmotor (10) nach einem der Patentansprüche 1 bis 8, wobei anstelle der eisenlosen Trägerscheibe der Läufer (14)
(i) ein selbsterregter oder permanenterregter Läufer mit einer weichmagnetischen Trägerscheibe ist, wobei an beiden Stirnseiten der Trägerscheibe in axialer orientierte Magnetscheibensegmente angebracht sind, oder
(ii) der selbsterregte oder permanenterregte Läufer als durchgehende Magnetscheibe realisiert ist, die polweise axial alternierend orientiert magnetisiert ist.

10. Elektrischer getriebeloser Scheiben-Kurzzeitmotor (10) nach einem der Patentansprüche 1 bis 9, wobei
(i) die Trägerscheiben (14', 16') der Läufer (14) und/oder der Ständer (16) mit einer reibungserhöhenden oder reibungsverringernden Beschichtung versehen sind, und/oder (ii) auf die Trägerscheiben (14', 16') der Läufer (14) und der Ständer (16) eine Einrichtung zur Ausübung von Zug- oder Schubkraft wirkt, und/oder wobei
(iii) vorzugsweise im Betrieb der Scheibenläufermaschine (10) elektrische Ströme durch die Ständerspulen mit vorbestimmter Phasenlage gegenüber der Position der Läuferspulen oder der Läufer-Permanentmagnete eine anziehende oder abstoßende Kraft zwischen Läufer- und Ständerscheiben (14', 16') bewirken.

11. Elektrischer getriebeloser Scheiben-Kurzzeitmotor (10) nach Patentanspruch 1, bei der zumindest eine Lage des Ständers einen einseitigen oder zweiseitigen, an seiner Deckfläche und/oder seiner Bodenfläche offenen kreiszylindrischen Ring bildet, der durch die Multilayerplatine(n) mit dem radialen Abschnitt der Ständer-Feldspulen in axialer Richtung unterteilt ist, und wobei ein stirnseitig / bodenseitig offener Raum für Permanentmagnete der Läufer geboten ist, welche jeweils in die offenen kreiszylindrischen Ringe eintauchen.

12. Elektrischer getriebeloser Scheiben-Kurzzeitmotor (10) nach einem der Patentansprüche 1 bis 14, bei der die Permanentmagnete des Läufers als Ringsegmente gestaltet sind, die in Umfangsrichtung facettiert sind, so dass die benachbarte Ringsegmente zueinander starr orientiert und beabstandet sind.

13. Elektronisch gesteuerter, treibladungsloser Gurtautomat eines Fahrzeuginsassenrückhaltesystems mit einem elektrischen getriebelosen Scheiben-Kurzzeitmotor nach einem der vorhergehenden Ansprüche, der direkt/getriebelos mit einer Gurtwickelwelle des Gurtautomaten gekoppelt ist.

## Claims

1. Electric gearless short-term disk motor (10) comprising
at least one rotor (14) and at least one at least partially corresponding stator (16), the field coils (20) of each stator (16) being designed with two, three or higher phases, and being electrically connected to an electrical power supply (30), the at least one rotor (14) and the at least one stator (16) each having a front surface (14a, 14b; 16a, 16b) facing one another, wherein
the at least one rotor (14) and the at least one stator (16) each have an iron-free carrier disk (14', 16') which carry field coils (20) or permanent magnets (22),
an air gap (18) is formed between the carrier disk (14') of each rotor (14) and the carrier disk (16') of each stator (16),
the field coils (20) and / or the permanent magnets are aligned and arranged on the carrier disk (14') of each rotor (14) or the carrier disk (16') of each stator (16) in such a way that the field coils (20) in the current-flowing state and / or the permanent magnets (→, ←) at least temporarily generate magnetic fields in the same or opposite directions, which cause a rotary or longitudinal relative movement of the rotor (14) to the stator (16),
the carrier disk (16') of each stator (16) is designed as a multilayer circuit board and has a plurality of stator field coils (20), **characterized in that**
the field coils (20) of each stator (16) have embedded or at least partially exposed, multiphase conductive tracks with vias (20a) which extend in a meandering manner along the circumference of each stator (16) and have sections of the stator field coils extending essentially in the radial direction (20) as well as end windings (20w) of the stator field coils (20) oriented essentially in the circumferential direction of the stator (16),
the multilayer board, in the radial direction inside and / or outside on one or both axial sides of the sections (20r) of the stator field coil (20) which extend essentially in the radial direction is several layers thicker than the region of the circuit board which carries the radial sections (20r) of the stator field coil (20), wherein
the thicker region of the multilayer circuit board has at least a part of the end windings (20w) of the stator field coil (20), **in that** these preferably ring-shaped multilayer circuit board layers protruding in the axial direction encompass conductive tracks (201) which extend in sections in the circumferential direction, which are each electrically connected with the sections (20r) of the stator field coil (20) extending in the radial direction by means of one or more of the vias (20a).

2. Electric gearless short-term disk motor (10) according to claim 1, wherein the carrier disk (14') of each rotor (14) and / or the carrier disk (16') of each stator (16) are designed as a circuit board, and
permanent magnets (→, ←) which are embedded in the carrier disk (14') of each rotor (14) or each stator (16) or are at least partially exposed are provided as permanent magnets (→, ←), which are approximately 0.5 up to 3 times, preferably once or twice as high as the air gap (18), the permanent magnets (→, ←) preferably being designed as rare earth magnets with a high remanent induction and / or with a high coercive field strength.

3. Electric gearless short-term disk motor (10) according to claim 1 or 2, wherein the carrier disk (14') of each rotor (14) is received on a machine shaft (20) in a rotationally fixed manner and movable in the axial direction.

4. Electric gearless short-term disk motor (10) according to one of claims 1 to 3, wherein the space located between or in the field coils (20) of the rotor (14) and / or the stator (16) is iron-free.

5. Electric gearless short-term disk motor (10) according to one of claims 1 to 4, wherein
(i) the stator coils (20) are configured with corresponding rotors (14) to form a plurality of coupled single-phase machines, and / or
(ii) each rotor (14) is designed as a preferably single-phase eddy current rotor or as a magnetic rotor.

6. Electric gearless short-term disk motor (10) according to one of claims 1 to 5, wherein iron-containing covers (22) are provided on both front faces of the machine, which
(i) are designed to absorb high magnetic axial forces, and / or
(ii) are designed for magnetic flux return, and / or
the disk rotor machine (10) is formed from an even number of symmetrical machines which are arranged axially one behind the other, and the magnetic flux return and / or the current return of an even-numbered machine occurs in an odd-numbered machine.

7. Electric gearless short-term disk motor (10) according to one of claims 1 to 6, wherein
(i) the rotor (14) is biased in a first direction of movement or rotation by a spring arrangement (24), and / or
(ii) the spring arrangement (24) is designed as a field coil power supply of the rotor, which, on the one hand, is coupled to an electrical power supply (30) and, on the other hand, is dragging on or firmly connected to the field coil(s) (20) of the rotor (14) via contact lines (24c), and / or
(iii) the spring arrangement (24) has spiral springs which are connected parallel to one another, next to one another or multilayered, insulated from one another, in particular made of spring steel or spring bronze.

8. Electric gearless short-term disk motor (10) according to one of claims 1 to 6, wherein the carrier disks (14', 16') of the rotors (14) and / or stator (16) are provided with a friction-increasing or friction-reducing coating, and / or a device for exerting a tensile or thrust force acts on the carrier disks (14', 16') of the rotors (14) and the stator (16), the device comprising in particular one or more tensile or thrust springs (22c).

9. Electric gearless short-term disk motor (10) according to one of claims 1 to 8, wherein, instead of the iron-free carrier disk, the rotor (14)
(i) is a self-excited or permanently excited rotor with a soft magnetic carrier disk, with axially oriented magnetic disk segments being attached to both front surfaces of the carrier disk, or
(ii) the self-excited or permanently excited rotor is implemented as a continuous magnetic disk, which is magnetized in an axially alternating pole-wise manner.

10. Electric gearless short-term disk motor (10) according to one of claims 1 to 9, wherein
(i) the carrier disks (14', 16') of the rotors (14) and / or the stator (16) are provided with a friction-increasing or friction-reducing coating, and / or
(ii) a device for exerting a tensile or thrust force acts on the carrier disks (14', 16') of the rotors (14) and the stator (16), and / or wherein
(iii) preferably during operation of the disk rotor machine (10), electrical currents through the stator coils with a predetermined phase position relative to the position of the rotor coils or the rotor permanent magnets cause an attractive or repulsive force between the rotor and stator disks (14', 16').

11. Electric gearless short-term disk motor (10) according to claim 1, in which at least one layer of the stator forms a one-sided or two-sided, circular cylindrical ring open on its top surface and / or its bottom surface, which is subdivided in the axial direction through the multilayer circuit board(s) with the radial section of the stator field coils, and a space which is open at the front / bottom is provided for permanent magnets of the rotors, which each plunge into the open circular cylindrical rings.

12. Electric gearless short-term disk motor (10) according to one of claims 1 to 14, in which the permanent magnets of the rotor are designed as ring segments which are faceted in the circumferential direction so that the adjacent ring segments are rigidly oriented and spaced from one another.

13. Electronically controlled, propellant-free seat belt automat of a vehicle occupant restraint system with an electric gearless short-term disk motor according to one of the preceding claims, which is coupled directly / gearless with a belt-winding shaft of the seat belt automat.

## Revendications

1. Moteur électrique de courte durée à rotor en disque sans engrenage (10), comprenant
au moins un rotor (14) et au moins un stator (16) au moins partiellement correspondant, les bobines de champ (20) de chaque stator (16) étant de conception biphasée, triphasée ou supérieure et étant reliées électriquement à une alimentation électrique (30), ledit au moins un rotor (14) et ledit au moins un stator (16) ayant des faces frontales respectives (14a, 14b ; 16a, 16b) tournées l'une vers l'autre, dans lequel
• ledit au moins un rotor (14) et ledit au moins un stator (16) comprennent chacun un disque support sans fer (14', 16') qui portent des bobines de champ (20) ou des aimants permanents (22),
• un entrefer (18) est formé entre le disque support (14') de chaque rotor (14) et le disque support (16') de chaque stator (16),
• les bobines de champ (20) et/ou les aimants permanents sont orientés de telle sorte et disposés sur le disque support (14') de chaque rotor (14) ou le disque support (16') de chaque stator (16) de telle sorte que les bobines de champ (20) parcourues par un courant et/ou les aimants permanents (→, ←) provoquent au moins temporairement des champs magnétiques de même sens ou de sens opposé qui entraînent un mouvement relatif rotatif ou longitudinal du rotor (14) par rapport au stator (16),
• le disque support (16') de chaque stator (16) est conçu comme une carte de circuit imprimé multicouche et comprend plusieurs bobines de champ de stator (20), **caractérisé en ce que**
• les bobines de champ (20) de chaque stator (16) comprennent des pistes conductrices multiphases noyées ou au moins partiellement dégagées avec des trous métallisés (20a), lesquelles s'étendent en méandres le long de la circonférence de chaque stator (16) et comprennent des sections des bobines de champ de stator (20) s'étendant essentiellement dans la direction radiale ainsi que des têtes d'enroulement (20w) des bobines de champ de stator (20) orientées essentiellement dans la direction circonférentielle du stator (16),
• dans la direction radiale à l'intérieur et/ou à l'extérieur de la carte de circuit imprimé multicouche, sur un ou les deux côtés axiaux des sections (20r) de la bobine de champ de stator (20) s'étendant essentiellement dans la direction radiale, la carte de circuit imprimé multicouche est plus épaisse de plusieurs couches que la zone de la carte de circuit imprimé qui porte les sections radiales (20r) de la bobine de champ de stator (20), dans lequel
• la zone plus épaisse de la carte de circuit imprimé multicouche comprend au moins une partie des têtes d'enroulement (20w) de la bobine de champ de stator (20), ces couches de carte de circuit imprimé multicouche, de préférence annulaires et faisant saillie dans la direction axiale, comprenant des pistes conductrices (20l) qui s'étendent par sections dans la direction circonférentielle et sont reliées électriquement aux sections (20r) de la bobine de champ de stator (20) s'étendant dans la direction radiale, chaque fois au moyen d'un ou de plusieurs des trous métallisés (20a).

2. Moteur électrique de courte durée à rotor en disque sans engrenage (10) selon la revendication 1, dans lequel le disque support (14') de chaque rotor (14) et/ou le disque support (16') de chaque stator (16) est réalisé sous la forme d'une carte de circuit imprimé, et
des aimants permanents (→, ←) noyés ou au moins partiellement dégagés dans le disque support (14') de chaque rotor (14) ou de chaque stator (16) sont prévus comme aimants permanents (→, ←), qui ont une hauteur dans la direction axiale d'environ 0,5 à 3 fois, de préférence une ou deux fois celle de l'entrefer (18), les aimants permanents (→, ←) étant de préférence conçus comme des aimants aux terres rares à forte induction rémanente et/ou à forte intensité de champ coercitif.

3. Moteur électrique de courte durée à rotor en disque sans engrenage (10) selon la revendication 1 ou 2, dans lequel le disque support (14') de chaque rotor (14) est reçu sur un arbre de machine (20) de manière solidaire en rotation et mobile dans la direction axiale.

4. Moteur électrique de courte durée à rotor en disque sans engrenage (10) selon l'une des revendications 1 à 3, dans lequel un espace du rotor (14) et/ou du stator (16) se trouvant entre ou dans les bobines de champ (20) est sans fer.

5. Moteur électrique de courte durée à rotor en disque sans engrenage (10) selon l'une des revendications 1 à 4, dans lequel
(i) les bobines de stator (20) sont configurées avec des rotors correspondants (14) pour former plusieurs machines monophasées couplées, et/ou
(ii) chaque rotor (14) est conçu comme un rotor à courants de Foucault de préférence monophasé ou comme un rotor magnétique.

6. Moteur électrique de courte durée à rotor en disque sans engrenage (10) selon l'une des revendications 1 à 5, dans lequel des caches contenant du fer (22) sont prévus aux deux faces frontales de la machine, lesquels
(i) sont conçus pour absorber des forces axiales magnétiques élevées, et/ou
(ii) sont conçus pour un retour de flux magnétique, et/ou
la machine à rotor en disque (10) est formée d'un nombre pair de machines symétriques disposées axialement les unes derrière les autres, et le retour de flux magnétique et/ou le retour de courant d'une machine paire a lieu dans une machine impaire.

7. Moteur électrique de courte durée à rotor en disque sans engrenage (10) selon l'une des revendications 1 à 6, dans lequel
(i) le rotor (14) est précontraint dans un premier sens de mouvement ou de rotation par un dispositif à ressort (24), et/ou
(ii) le dispositif à ressort (24) est conçu comme une alimentation en courant de bobine de champ du rotor, qui est couplée, d'une part, à une alimentation électrique (30) et est reliée, d'autre part, par frotteur ou de manière fixe à la ou aux bobine(s) de champ (20) du rotor (14) par des lignes de contact (24c), et/ou
(iii) le dispositif à ressort (24) comprend des ressorts en spirale, en particulier en acier à ressort ou en bronze à ressort, montés parallèlement les uns aux autres, les uns à côté des autres ou en plusieurs couches et isolés les uns des autres.

8. Moteur électrique de courte durée à rotor en disque sans engrenage (10) selon l'une des revendications 1 à 6, dans lequel les disques supports (14', 16') des rotors (14) et/ou des stators (16) sont munis d'un revêtement augmentant ou réduisant le frottement, et/ou un moyen pour exercer une force de traction ou de poussée agit sur les disques supports (14', 16') des rotors (14) et des stators (16), lequel moyen comprend en particulier un ou plusieurs ressorts de traction ou de poussée (22c).

9. Moteur électrique de courte durée à rotor en disque sans engrenage (10) selon l'une des revendications 1 à 8, dans lequel, à la place du disque support sans fer, le rotor (14)
(i) est un rotor auto-excité ou excité en permanence avec un disque support magnétique doux, dans lequel des segments de disque magnétique orientés axialement sont montés sur les deux faces frontales du disque support, ou
(ii) le rotor auto-excité ou excité en permanence est réalisé sous la forme d'un disque magnétique continu qui est magnétisé dans une orientation alternant axialement pôle par pôle.

10. Moteur électrique de courte durée à rotor en disque sans engrenage (10) selon l'une des revendications 1 à 9, dans lequel
(i) les disques supports (14', 16') des rotors (14) et/ou des stators (16) sont munis d'un revêtement augmentant ou réduisant le frottement, et/ou
(ii) un moyen pour exercer une force de traction ou de poussée agit sur les disques supports (14', 16') des rotors (14) et des stators (16), et/ou dans lequel
(iii) de préférence pendant le fonctionnement de la machine à rotor en disque (10), des courants électriques traversant les bobines de stator avec une position de phase prédéterminée par rapport à la position des bobines de rotor ou des aimants permanents de rotor provoquent une force d'attraction ou de répulsion entre les disques de rotor et de stator (14', 16').

11. Moteur électrique de courte durée à rotor en disque sans engrenage (10) selon la revendication 1, dans lequel au moins une couche du stator forme un anneau cylindrique circulaire ouvert d'un côté ou des deux côtés sur sa surface supérieure et/ou sa surface inférieure, lequel est divisé dans la direction axiale par la ou les carte(s) de circuit imprimé multicouche avec la section radiale des bobines de champ de stator, et dans lequel un espace ouvert sur la face avant/la face inférieure est prévu pour les aimants permanents des rotors, qui plongent chacun dans les anneaux cylindriques circulaires ouverts.

12. Moteur électrique de courte durée à rotor en disque sans engrenage (10) selon l'une des revendications 1 à 14, dans lequel les aimants permanents du rotor sont conçus comme des segments annulaires qui sont facettés dans la direction circonférentielle de telle sorte que les segments annulaires adjacents sont orientés de manière rigide les uns par rapport aux autres et espacés les uns des autres.

13. Enrouleur de ceinture de sécurité sans charge propulsive, à commande électronique, d'un système de retenue des occupants d'un véhicule, équipé d'un moteur électrique de courte durée à rotor en disque sans engrenage selon l'une des revendications précédentes, qui est couplé directement/sans engrenage à un arbre d'enroulement de ceinture de l'enrouleur de ceinture de sécurité.
